# EUROPEAN PATENT SPECIFICATION

(11) **EP 4 444 541 B1**
(45) Date of publication and mention of the grant of the patent: **29.10.2025**
(21) Application number: 22830502.5
(22) Date of filing: 06.12.2022
(51) Int. Cl.: B32B 17/10

(54) **FLUORESCENCE DISPLAY**
FLUORESZENZANZEIGE
AFFICHAGE PAR FLUORESCENCE

(30) Priority: 10.12.2021 EP 21213672
(43) Date of publication of application: 16.10.2024
(73) Proprietor: Kuraray Europe GmbH, 65795 Hattersheim (DE)
(72) Inventor: KELLER, Uwe, 77210 Avon (FR); MUMMY, Florian, 60325 Frankfurt am Main (DE); BIER, Felix, 76879 Ottersheim (DE)
(74) Representative: Janßen, Christian Oliver
(86) International application number: PCT/EP2022/084514
(87) International publication number: WO 2023/104766

(56) References cited:
- EP-A1- 2 674 406
- US-B2- 8 734 953

## Description

The present invention relates to functionalized laminates, specifically to automotive, decorative or architectural glazing with display systems projected thereon.

In their simplest form, laminates for such display systems consist of a sandwich structure comprising two sheets of a material such as glass joined together by a thermoplastic interlayer comprising or consisting of polyvinyl butyral (PVB).

The automotive industry has been striving to develop display technologies that allow more graphical information to be displayed through or onto automotive glazing parts such as windscreens so as to convey critical information to drivers while still allowing them to keep their attention on the road. To this end, emissive projection displays (EPD) have been developed that use the principles of fluorescent conversion of luminescent materials that can be created in transparent form and integrated into the windshield. These displays allow visible light to be generated on a fully transparent glass surface, displaying superior quality images.

Wavelength selective excitation can be used to render full-colour emissive displays. To achieve the best image qualities, the screen should be constructed by stacking three layers of transparent RGB emissive films with distinctive absorption and emission characteristics in order to be able to more selectively excite the fluorescent molecules in the requested colour only. However, as the fluorescent molecules used for these purposes usually migrate throughout the interlayer materials such as plasticized PVB, a separating layer needs to be installed between the transparent RGB emissive films and the standard plasticized PVB interlayer and/or between the different RGB emissive films. The standard material used for this purpose is a thin film made from polyethylene terephthalate (PET), used for example in US 8,734,953 B2.

The current inventors have now surprisingly found that a combination of PVB and PET as used in the prior art lead to negative effects in terms of transparency as reflected in a relatively high haze level.

Thus, there is still a need in the industry for improved multilayer interlayer films to be incorporated into laminates, especially for display applications.

Accordingly, it was an objective of the invention to provide a laminated glass with improved appearance, improved cost and/or improved manufacturability. Particularly, it was an objective of the invention to provide a laminated glass with improved transparency of visible light and/or an improved haze level.

These and other objectives were solved by the present invention.

Accordingly, a first embodiment of the present invention concerns a multilayer thermoplastic interlayer for laminated glass comprising, in that order,
- a film A1 comprising a polyvinyl acetal and at least one functional additive,
- an optional film C1 comprising a polyvinyl alcohol,
- a film A2 comprising a polyvinyl acetal and at least one functional additive,
- an optional film C2 comprising a polyvinyl alcohol,
- a film A3 comprising a polyvinyl acetal and at least one functional additive,
- a film C3 comprising a polyvinyl alcohol.

Thus, the inventive interlayer comprises at least four films, of which three are bearing some kind of functionality while the other one to three films provide a barrier function. The barrier films C generally have the purpose that the functional additives present in the films A1, A2 and A3 do not migrate from one film to the other.

In case the functional addictive in the films A has a rather low level of migration and the films A do not contain any added plasticizer, the optional films C1 and C2 are generally not required. However, in order to avoid any unwanted migration between the films A1 to A3, the additional barrier films C1 and C2 are preferably present. In another preferred embodiment, only film C1 is present and film C2 is not present. In yet another preferred embodiment, film C2 is present and film C1 is not present.

Optionally, additional films can be present between films A and C. For example, non-functional films can be present which serve as a spacer between the three films A in order to provide an improved three-dimensional effect.

Preferably, the functional additive is independently selected from the list consisting of a luminescent compound, an IR blocking compound, a UV blocking compound, a photochromic compound, a light diffusing compound, a dye and a pigment.

The functional additive in each individual layer A1 to A3 can be of the same type or of a different type.

More preferably, the functional additive is of the same type and each functional additive is a luminescent compound, preferably a fluorescent compound.

Preferably, the three films A1 to A3 each comprise a fluorescent compound which can emit light at different wavelengths, e.g. an RGB system, and thus, can serve as a three-dimensional, multicolour display.

Such fluorescent compounds are known in the art.

Preferably, the fluorescent compound has a size of less than 500 nm, more preferably between 1 pm and 100 nm, most preferably between 10 and 1000 pm. The fluorescent compound is preferably chosen from inorganic fluorescent compounds; organic molecules and dyes; semiconductor based fluorescent compounds; and organometallic molecules.

Suitable fluorescent compounds include metal oxides, metal halides, metal chalcogenides (e.g. metal sulfides), or their hybrids, such as metal oxo-halides, metal oxo-chalcogenides.

Other suitable fluorescent compounds include organic molecules, fluorescent organic polymers, semiconductor fluorescent compounds, such as II-VI or III-V compound semiconductors, e.g. fluorescent quantum dots, organometallic molecules which include at least a metal center such as rare earth elements (e.g. Eu, Tb, Ce, Er, Tm, Pr, Ho) and transitional metal elements such as Cr, Mn, Zn, Ir, Ru, V, and main group elements such as B, Al, Ga, etc., wherein the metal elements are chemically bonded to organic groups to prevent the quenching of the fluorescence from the hosts or solvents.

Other suitable fluorescent compounds include (YmA1-m)3(AlnB1-n) 5012, doped with Ce; where 0≦m, n=1; A include other rare earth elements, B include B, Ga; phosphors containing metal silicates, metal borates, metal phosphates, and metal aluminates; phosphors containing common rare earth elements (e.g. Eu, Tb, Ce, Dy, Er, Pr, Tm) and transitional or main group elements (e.g. Mn, Cr, Ti, Ag, Cu, Zn, Bi, Pb, Sn, TI) as the fluorescent activators, are also preferred in their applications to FC displays. Finally, some undoped materials (e.g. Metal (e.g. Ca, Zn, Cd) tungstates, metal vanadates, ZnO, etc) are also preferred FC display materials.

Suitable laser dye classes include: Pyrromethene, Coumarin, Rhodamine, Fluorescein, Solvent Yellow 98, 2,5-di substituted terephthalic acid esters, amides or salts, other aromatic hydrocarbons and their derivatives.

Suitable semiconductor nanoparticles (e.g., quantum dots) include LIF display materials and are inorganic crystallites between 1 nm and 1000 nm in diameter, preferably between 2 nm to 50 nm. For example, it includes a "core" of one or more first semiconductor materials, and may be surrounded by a "shell" of a second semiconductor material. The core and/or the shell can be a semiconductor material including, but not limited to, those of the group II-VI (ZnS, ZnSe, ZnTe, CdS, CdSe, CdTe, HgS, HgSe, HgTe, MgS, MgSe, MgTe, CaS, CaSe, CaTe, SrS, SrSe, SrTe, BaS, BaSe, BaTe, and the like) and III-V (GaN, GaP, GaAs, GaSb, InN, InP, InAs, InSb, and the like) and IV (Ge, Si, and the like) materials, and an alloy or a mixture thereof.

Suitable fluorescent organometallic molecules include a metal center of rare earth elements including Eu, Tb, Er, Tm, Ce protected with organic chelating groups. The metal center may also include transitional elements such as Zn, Mn, Cr, Ir, etc and main group elements such as B, Al, Ga. Such organometallic molecules can readily dissolved in liquid or transparent solid host media and form a transparent fluorescent screen for the disclosed 2-D transparent display with minimum light scattering. Some examples of such fluorescent organomettalic molecules include:
Tris(dibenzoylmethane)mono(phenanthroline)europium(III);
Tris(8-hydroxyquinoline)erbium;
Tris(1-phenyl-3-methyl-4-(2,2-dimethylpropan-1-oyl)pyrazolin-5-one)terbium(III);
Bis(2-methyl-8-hydroxyquinolato)zinc;
Diphenylborane-8-hydroxyquinolate.

The fluorescent compounds can be dissolved or dispersed into solvents like water or organic solvents. The resulting mixture can then be coated onto one or both surfaces of the films A to form a solid film or coating after drying. Alternatively, the fluorescent compounds can be dispersed as such or by means of a dispersing agent in the polyvinyl acetal.

Interlayers which are used to bind two sheets of glass together are generally made from plasticized polyvinyl acetals like polyvinyl butyral (PVB), whereas the films A according to the present invention preferably contain little or even no plasticizer. Thus, a further plasticized film B is preferably present in the interlayer according to the present invention. In that case another film C is also added to the interlayer stack in order to avoid the functional particles to migrate into film B.

Thus, another preferred embodiment of the present invention is a multilayer thermoplastic interlayer film comprising, in that order,
- a film A1 comprising a polyvinyl acetal and at least one functional additive,
- a film C1 comprising a polyvinyl alcohol,
- a film A2 comprising a polyvinyl acetal and at least one functional additive,
- a film C2 comprising a polyvinyl alcohol,
- a film A3 comprising a polyvinyl acetal and at least one functional additive.
- film C3 comprising a polyvinyl alcohol,
- a film B comprising a polyvinyl acetal and equal to or more than 16 wt% of a plasticizer.

Preferably, the films A comprise a polyvinyl acetal, most preferably polyvinyl butyral (PVB).

The thickness of a film A in the starting state prior to lamination is preferably 5 - 250 µm, more preferably 5 - 100 µm, most preferably 20 - 30 µm.

Films A used in accordance with the invention preferably contains, prior to lamination, less than 10 % by weight, more preferably less than 5 % by weight, most preferably less than 3 % by weight, and specifically no intentionally added plasticiser. In a preferred embodiment, film A contains 0.1 - 3 % by weight of plasticiser.

Film B may be any plasticized PVB film known in the art.

The thickness of film B in the starting state is 380 - 2500 µm, preferably 600 - 1000 µm, preferably 700 - 900 µm.

Plasticiser-containing films B used in accordance with the invention contain, in the starting state prior to lamination, at least 22 % by weight, such as 22.0 - 45.0 % by weight, preferably 25.0 - 32.0 % by weight and in particular 26.0 - 30.0 % by weight plasticiser.

The films A or B preferably contain polyvinyl acetals having a proportion of polyvinyl acetate groups, either identically or differently, of 0.1 to 20 mol %, preferably 0.5 to 3 mol %, or 5 to 8 mol %.

The polyvinyl alcohol content of the polyvinyl acetal used in film A may be between 6 - 26 % by weight, 8 - 24 % by weight, 10 - 22 % by weight, 12 - 21 % by weight, 14 - 20 % by weight, 16 - 19 % by weight and preferably between 16 and 21 % by weight or 10 - 16 % by weight.

The films C comprise a polyvinyl alcohol. Preferably, the films C consist of a polyvinyl alcohol. Polyvinyl alcohol are generally prepared by hydrolysis of a corresponding polyvinyl acetate and the term shall also denote polymers including up to 10 wt% of ethylene groups in the polymer chain. Also preferably, films C1, C2 and optional C3 have a thickness from 1 to 50 µm, more preferably between 1 and 10 µm.

Preferably, film C comprises a colour compensation dye, water, antioxidants, adhesion regulators, optical brighteners, stabilisers, colourants, processing aids, pyrogenic silicic acid and/or surface active substances.

Films A and/or B used in accordance with the invention may contain, as plasticiser, one or more compounds selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

By definition, plasticisers are organic liquids having a high boiling point. For this reason, further types of organic liquids having a boiling point above 120 °C can also be used as plasticiser.

In addition, films A and B may contain further additives, such as residual quantities of water, antioxidants, adhesion regulators, optical brighteners, stabilisers, colourants, processing aids, pyrogenic silicic acid and/or surface active substances.

Another aspect of the present invention concerns a laminated glass comprising two sheets of glass and the multilayer thermoplastic interlayer as described above.

Preferably, the laminated glass comprises two sheets of glass and a multilayer thermoplastic interlayer according to any one of claims 1 to 10 comprising, in that order,
- a first glass sheet,
- a film A1 comprising a polyvinyl acetal and a fluorescent compound,
- a film C1 comprising a polyvinyl alcohol,
- a film A2 comprising a polyvinyl acetal and a fluorescent compound,
- a film C2 comprising a polyvinyl alcohol,
- a film A3 comprising a polyvinyl acetal and a fluorescent compound,
- a film C3 comprising a polyvinyl alcohol,
- a film B comprising a polyvinyl acetal and equal to or more than 16 wt% of a plasticizer, and
- a second glass sheet.

The current invention also concerns the use of the laminate as described above as a windshield, side window, rear window and/or skylight in a motor vehicle; as glazing for an aircraft, a train or a ship or as glazing for a shop window, an exterior or interior partition wall, a balustrade, an elevator, or facade.

The lamination step for producing a laminated glass is preferably carried out such that the interlayer film as described above is positioned between two glass sheets and the layered body thus prepared is pressed under increased or reduced pressure and increased temperature to form a laminate.

To laminate the layered body, the methods with which a person skilled in the art is familiar can be used with and without prior production of a pre-laminate.

So called "autoclave processes" are carried out at an increased pressure from approximately 10 to 15 bar and temperatures from 100 to 150 °C during approximately 2 hours.

Vacuum laminators may also be used. These consist of a chamber that can be heated and evacuated, in which laminated glazing can be laminated within 30 - 60 minutes. Reduced pressures from 0.01 to 300 mbar and temperatures from 100 to 200 °C, in particular 130 - 160 °C, have proven their worth in practice.

The glass film laminate may then be subjected to an autoclave process.

### Measurement methods

The vinyl alcohol content and vinyl acetate content of the polyvinyl acetals are determined in accordance with DIN ISO 3681 (Acetate content) and DIN ISO 53240 (PVA content).

The light transmission with respect to the glass sheet is measured according to DIN EN 410.

Method Haze was measured according to ASTM 1003.

### Examples

### Preparation of a PVB solution comprising fluorophore

A 18.0 % by weight solution of polyvinyl butyral (PVB) powder (Mowital^{®} B60H commercially available from Kuraray Europe GmbH) dissolved in ethanol was prepared. A commercially available red fluorophore (λmax = 328 nm), a commercially available blue fluorophore (λmax = 370 nm), and a commercially available green fluorophore (λmax = 440 nm) were used for the films A1 to A3, respectively.

The concentration of the fluorophores are summarized in the table below.

| Film | Fluorophore | Concentration (calculated based on the weight of PVB) |
|---|---|---|
| A1 | Red | 2 wt-% |
| A2 | Blue | 1 wt-% |
| A3 | Green | 0.05 wt-% |

### Preparation of the multilayer thermoplastic interlayer film not according to the invention (comparative examples comp 1 to 4)

A polyethylene terephthalate (PET) film with a smooth surface (grade Hostaphan^{®} RN available from Mitsubishi Polyester Film GmbH) and a thickness of 23 µm was used for all films film C1, C2 and C3.

The PET films were coated with the PVB solutions prepared above to obtain a multilayer interlayer comprising films A1/C1/A2/C2/A3 using the following method:
For the PVB film coating process an automatic precision film coating machine was used (supplier: MTV Messtechnik, Erftstadt; model: CX202) using a universal film applicator with a coating width of 180 mm (supplier also MTV Messtechnik). The coating device was set to a gap height of 400 µm.

The obtained PVB films were dried at room temperature for 12 hours. The resulting dry film thickness was measured using a mechanical film thickness gauge. Films A1 to A3 had a film thickness of 25 µm +/- 3 µm, respectively.

### Preparation of the laminated glass

A laminated glass of 15 x 15 cm was prepared using two plies of 2.1 mm Planiclear^{®} float glass.

A plasticized PVB film with a thickness of 760 µm (Trosifol^{®} UV Extra Protect, 0.76 mm) commercially available from Kuraray Europe GmbH) was used as film B.

For the lamination, a vacuum bag was used followed by an autoclave. The temperature of the vacuum bag was set to 100 °C. The pressure of the autoclave was set to 12 bar and the temperature was set to 140 °C.

The following samples were prepared and the final glass laminates were analyzed in terms of haze:

| Sample | composition | Haze (normed)* |
|---|---|---|
| Comp1 | glass/A1/A2/A3/B/glass | **1.0** |
| Comp2 | glass/A1/A2/A3/C1(PET)/B/glass | **1.2** |
| Comp3 | glass/ A1/A2/C1(PET)/A3/B/glass | **1.2** |
| Comp4 | glass/A1/C1(PET)/A2/C2(PET)/A3/B/glass | **1.5** |

| | | |
|---|---|---|
| *Haze values were normed using a single film A1 without barrier layers | | |

The results in the above table clearly show the increase of the haze value of the final laminate increases with increasing number of PET films C present in the laminate.

### Preparation of the multilayer thermoplastic interlayer film according to the invention (examples Ex 1 to 5)

PVB films A1 to A3 were prepared as described above. However, after drying of the PVB films, the PET film was peeled off the PVB film to obtain the three PVB films A1 to A3 as free-standing films.

### Preparation of a polyvinyl alcohol (PVA) solution and coating

10 gram of polyvinyl alcohol (Exceval^{®} HR30-10 commercially available from Kuraray Co. Ltd.) was dissolved in 90 g of water with high stirring speed under reflux conditions. The solution was cooled down to room temperature with the help of a water bath with a circulation cooling system.
The PVA solution thus obtained was coated onto the PVB films obtained with an universal applicator (coating width: 180 mm), set with a gap height of 50 µm. The resulting film is dried at 60 °C for 10 minutes. The obtained (dry) PVA film thickness was 5 µm +/- 1 µm and was used as film C1 to C3, respectively.

The following laminates were prepared using the method as described above. Ex1, 3 and 4 are not according to the persent invention.

| Sample | composition | Haze (normed*) |
|---|---|---|
| Ex1 | glass/A1/A2/A3/B/glass | **1,0** |
| Ex2 | glass/A1/A2/A3/C1 (PVA)/B/glass | **1,0** |
| Ex3 | glass/ A1/A2/C1(PVA)/A3/B/glass | **1,0** |
| Ex4 | glass/A1/C1(PVA)/A2/C2(PVA)/A3/B/glass | **1,0** |
| Ex5 | glass/A1/C1 (PVA)/A2/C2(PVA)/A3/C3(PVA)/B/glass | **1,0** |

| | | |
|---|---|---|
| *Haze values were normed using a single film B1 as reference system without barrier layers) | | |

The results in the above table show that the presence of the PVA films used as barrier films according to the present invention do not result in an increase of the haze value of the final laminate.

For comparison, a third series was prepared using a blank system without fluorophores in the films A1 to A3 as another means to compare the two different barrier systems (PET vs. PVA). Otherwise, the laminates were prepared as described above.

| Sample | composition | Haze (absolute values) |
|---|---|---|
| Comp5 | glass/A1/C1 (PET)/A2/C2(PET)/A3/C3(PET)/B/glass | **2.0** |
| Ex6 | glass/A1/C1 (PVA)/A2/C2(PVA)/A3/C3(PVA)/B/glass | **0.34** |

The results show that using a polyvinyl alcohol barrier layer C1 to C3 instead of a barrier made from PET substantially improved the haze value of the laminates to a degree that no negative influence of the barrier layer can be detected as compared to a reference system without barrier layers.

## Claims

1. A multilayer thermoplastic interlayer film comprising, in that order,
• a film A1 comprising a polyvinyl acetal and at least one functional additive,
• an optional film C1 comprising a polyvinyl alcohol,
• a film A2 comprising a polyvinyl acetal and at least one functional additive,
• an optional film C2 comprising a polyvinyl alcohol,
• a film A3 comprising a polyvinyl acetal and at least one functional additive.
• a film C3 comprising a polyvinyl alcohol.

2. The multilayer thermoplastic interlayer film according to claim 1 wherein each functional additive is independently selected from the list consisting of a luminescent compound, an IR blocking compound, a UV blocking compound, a light diffusing compound, a dye and a pigment.

3. The multilayer thermoplastic interlayer film according to claim 1 or 2 wherein each functional additive is a luminescent compound, preferably a fluorescent compound.

4. The multilayer thermoplastic interlayer film according to any one of the claims above comprising, in that order,
• a film A1 comprising a polyvinyl acetal and at least one functional additive,
• an optional film C1 comprising a polyvinyl alcohol,
• a film A2 comprising a polyvinyl acetal and at least one functional additive,
• an optional film C2 comprising a polyvinyl alcohol,
• a film A3 comprising a polyvinyl acetal and at least one functional additive.
• film C3 comprising a polyvinyl alcohol, and
• a film B comprising a polyvinyl acetal and equal to or more than 16 wt% of a plasticizer.

5. The multilayer thermoplastic interlayer film according to any one of the claims above comprising, in that order,
• a film A1 comprising a polyvinyl acetal and at least one functional additive,
• a film C1 comprising a polyvinyl alcohol,
• a film A2 comprising a polyvinyl acetal and at least one functional additive,
• a film C2 comprising a polyvinyl alcohol,
• a film A3 comprising a polyvinyl acetal and at least one functional additive.
• film C3 comprising a polyvinyl alcohol, and
• a film B comprising a polyvinyl acetal and equal to or more than 16 wt% of a plasticizer.

6. The multilayer thermoplastic interlayer film according to any one of the claims above wherein films A1, A2 and A3 are prepared by a solvent casting process.

7. The multilayer thermoplastic interlayer film according to any one of the claims above wherein the films A1, A2 and A3 have a thickness from 5 to 100 µm.

8. The multilayer thermoplastic interlayer film according to any one of the claims above wherein the films C1, C2 and optional C3 have a thickness from 1 to 10 µm.

9. The multilayer thermoplastic interlayer film according to any one of the claims above wherein each polyvinyl acetals is a polyvinyl butyral.

10. The multilayer thermoplastic interlayer film according to any one of the claims above wherein the films A1, A2 and A3 each comprise no added plasticizer.

11. A laminated glass comprising two sheets of glass and the multilayer thermoplastic interlayer according to any one of the claims 1 to 10.

12. The laminated glass according to claim 11 comprising two sheets of glass and a multilayer thermoplastic interlayer comprising, in that order,
• a first glass sheet,
• a film A1 comprising a polyvinyl acetal and a fluorescent compound,
• an optional film C1 comprising a polyvinyl alcohol,
• a film A2 comprising a polyvinyl acetal and a fluorescent compound,
• an optional film C2 comprising a polyvinyl alcohol,
• a film A3 comprising a polyvinyl acetal and a fluorescent compound,
• a film C3 comprising a polyvinyl alcohol,
• a film B comprising a polyvinyl acetal and equal to or more than 16 wt% of a plasticizer, and
• a second glass sheet.

13. The laminated glass according to claim 11 comprising two sheets of glass and a multilayer thermoplastic interlayer comprising, in that order,
• a first glass sheet,
• a film A1 comprising a polyvinyl acetal and a fluorescent compound,
• a film C1 comprising a polyvinyl alcohol,
• a film A2 comprising a polyvinyl acetal and a fluorescent compound,
• a film C2 comprising a polyvinyl alcohol,
• a film A3 comprising a polyvinyl acetal and a fluorescent compound,
• a film C3 comprising a polyvinyl alcohol,
• a film B comprising a polyvinyl acetal and equal to or more than 16 wt% of a plasticizer, and
• a second glass sheet.

14. Use of the laminated glass according to claim 11, 12 or 13 as a windshield, side window, rear window and/or skylight in a motor vehicle; as glazing for an aircraft, a train or a ship or as glazing for a shop window, an elevator, or facade.

## Patentansprüche

1. Mehrschichtiger thermoplastischer Zwischenschichtfilm, aufweisend, in dieser Reihenfolge,
• einen Film A1, welcher ein Polyvinylacetal und mindestens ein funktionelles Additiv aufweist,
• einen optionalen Film C1, welcher einen Polyvinylalkohol aufweist,
• einen Film A2, welcher ein Polyvinylacetal und mindestens ein funktionelles Additiv aufweist,
• einen optionalen Film C2, welcher einen Polyvinylalkohol aufweist,
• einen Film A3, welcher ein Polyvinylacetal und mindestens ein funktionelles Additiv aufweist.
• einen Film C3, welcher einen Polyvinylalkohol aufweist.

2. Mehrschichtiger thermoplastischer Zwischenschichtfilm nach Anspruch 1, wobei jedes funktionelle Additiv unabhängig aus der Liste ausgewählt ist, die aus einer lumineszierenden Verbindung, einer IR-blockierenden Verbindung, einer UVblockierenden Verbindung, einer lichtdiffundierenden Verbindung, einem Farbstoff und einem Pigment besteht.

3. Mehrschichtiger thermoplastischer Zwischenschichtfilm nach Anspruch 1 oder 2, wobei jedes funktionelle Additiv eine lumineszierende Verbindung, vorzugsweise eine fluoreszierende Verbindung ist.

4. Mehrschichtiger thermoplastischer Zwischenschichtfilm nach einem der vorhergehenden Ansprüche, aufweisend, in dieser Reihenfolge,
• einen Film A1, welcher ein Polyvinylacetal und mindestens ein funktionelles Additiv aufweist,
• einen optionalen Film C1, welcher einen Polyvinylalkohol aufweist,
• einen Film A2, welcher ein Polyvinylacetal und mindestens ein funktionelles Additiv aufweist,
• einen optionalen Film C2, welcher einen Polyvinylalkohol aufweist,
• einen Film A3, welcher ein Polyvinylacetal und mindestens ein funktionelles Additiv aufweist.
• einen Film C3, welcher einen Polyvinylalkohol aufweist, und
• einen Film B, welcher ein Polyvinylacetal und mindestens 16 Gew.-% eines Weichmachers aufweist.

5. Mehrschichtiger thermoplastischer Zwischenschichtfilm nach einem der vorhergehenden Ansprüche, aufweisend, in dieser Reihenfolge,
• einen Film A1, welcher ein Polyvinylacetal und mindestens ein funktionelles Additiv aufweist,
• einen Film C1, welcher einen Polyvinylalkohol aufweist,
• einen Film A2, welcher ein Polyvinylacetal und mindestens ein funktionelles Additiv aufweist,
• einen Film C2, welcher einen Polyvinylalkohol aufweist,
• einen Film A3, welcher ein Polyvinylacetal und mindestens ein funktionelles Additiv aufweist.
• einen Film C3, welcher einen Polyvinylalkohol aufweist, und
• einen Film B, welcher ein Polyvinylacetal und mindestens 16 Gew.-% eines Weichmachers aufweist.

6. Mehrschichtiger thermoplastischer Zwischenschichtfilm nach einem der vorhergehenden Ansprüche, wobei die Filme A1, A2 und A3 durch einen Lösungsgießprozess hergestellt werden.

7. Mehrschichtiger thermoplastischer Zwischenschichtfilm nach einem der vorhergehenden Ansprüche, wobei die Filme A1, A2 und A3 eine Dicke von 5 µm bis 100 µm aufweisen.

8. Mehrschichtiger thermoplastischer Zwischenschichtfilm nach einem der vorhergehenden Ansprüche, wobei die Filme C1, C2 und gegebenenfalls C3 eine Dicke von 1 µm bis 10 µm aufweisen.

9. Mehrschichtiger thermoplastischer Zwischenschichtfilm nach einem der vorhergehenden Ansprüche, wobei jedes Polyvinylacetal ein Polyvinylbutyral ist.

10. Mehrschichtiger thermoplastischer Zwischenschichtfilm nach einem der vorhergehenden Ansprüche, wobei die Filme A1, A2 und A3 jeweils keinen hinzugegebenen Weichmacher aufweisen.

11. Laminiertes Glas, welches zwei Glasschichten und die mehrschichtige thermoplastische Zwischenschicht nach einem der Ansprüche 1 bis 10 aufweist.

12. Laminiertes Glas nach Anspruch 11, welches zwei Glasschichten und eine mehrschichtige thermoplastische Zwischenschicht aufweist, aufweisend, in dieser Reihenfolge,
• eine erste Glasschicht,
• einen Film A1, welcher ein Polyvinylacetal und eine fluoreszierende Verbindung aufweist,
• einen optionalen Film C1, welcher einen Polyvinylalkohol aufweist,
• einen Film A2, welcher ein Polyvinylacetal und eine fluoreszierende Verbindung aufweist,
• einen optionalen Film C2, welcher einen Polyvinylalkohol aufweist,
• einen Film A3, welcher ein Polyvinylacetal und eine fluoreszierende Verbindung aufweist,
• einen Film C3, welcher einen Polyvinylalkohol aufweist,
• einen Film B, welcher ein Polyvinylacetal und mindestens 16 Gew.-% eines Weichmachers aufweist, und
• eine zweite Glasschicht.

13. Laminiertes Glas nach Anspruch 11, welches zwei Glasschichten und eine mehrschichtige thermoplastische Zwischenschicht aufweist, aufweisend, in dieser Reihenfolge,
• eine erste Glasschicht,
• einen Film A1, welcher ein Polyvinylacetal und eine fluoreszierende Verbindung aufweist,
• einen Film C1, welcher einen Polyvinylalkohol aufweist,
• einen Film A2, welcher ein Polyvinylacetal und eine fluoreszierende Verbindung aufweist,
• einen Film C2, welcher einen Polyvinylalkohol aufweist,
• einen Film A3, welcher ein Polyvinylacetal und eine fluoreszierende Verbindung aufweist,
• einen Film C3, welcher einen Polyvinylalkohol aufweist,
• einen Film B, welcher ein Polyvinylacetal und mindestens 16 Gew.-% eines Weichmachers aufweist, und
• eine zweite Glasschicht.

14. Verwendung des laminierten Glases nach Anspruch 11, 12 oder 13 als Windschutzscheibe, Seitenfenster, Heckfenster und/oder Dachfenster in einem Motorfahrzeug; als Verglasung für ein Flugzeug, einen Zug oder ein Schiff oder als Verglasung für ein Schaufenster, einen Fahrstuhl oder eine Fassade.

## Revendications

1. Film d'intercouche thermoplastique multicouches comprenant, dans cet ordre,
• un film A1 comprenant un acétal de polyvinyle et au moins un additif fonctionnel,
• un film optionnel C1 comprenant un alcool de polyvinyle,
• un film A2 comprenant un acétal de polyvinyle et au moins un additif fonctionnel,
• un film optionnel C2 comprenant un alcool de polyvinyle,
• un film A3 comprenant un acétal de polyvinyle et au moins un additif fonctionnel,
• un film C3 comprenant un alcool de polyvinyle.

2. Film d'intercouche thermoplastique multicouches selon la revendication 1 dans lequel chaque additif fonctionnel est choisi indépendamment dans la liste constituée par un composé luminescent, un composé de blocage IR, un composé de blocage UV, un composé diffusant la lumière, un colorant et un pigment.

3. Film d'intercouche thermoplastique multicouches selon la revendication 1 ou 2 dans lequel chaque additif fonctionnel est un composé luminescent, de préférence un composé fluorescent.

4. Film d'intercouche thermoplastique multicouches selon l'une quelconque des revendications ci-dessus comprenant, dans cet ordre,
• un film A1 comprenant un acétal de polyvinyle et au moins un additif fonctionnel,
• un film optionnel C1 comprenant un alcool de polyvinyle,
• un film A2 comprenant un acétal de polyvinyle et au moins un additif fonctionnel,
• un film optionnel C2 comprenant un alcool de polyvinyle,
• un film A3 comprenant un acétal de polyvinyle et au moins un additif fonctionnel,
• un film C3 comprenant un alcool de polyvinyle et
• un film B comprenant un acétal de polyvinyle et supérieur ou égal à ou à plus de 16 % en poids d'un plastifiant.

5. Film d'intercouche thermoplastique multicouches selon l'une quelconque des revendications ci-dessus comprenant, dans cet ordre,
• un film A1 comprenant un acétal de polyvinyle et au moins un additif fonctionnel,
• un film optionnel C1 comprenant un alcool de polyvinyle,
• un film A2 comprenant un acétal de polyvinyle et au moins un additif fonctionnel,
• un film optionnel C2 comprenant un alcool de polyvinyle,
• un film A3 comprenant un acétal de polyvinyle et au moins un additif fonctionnel,
• un film C3 comprenant un alcool de polyvinyle et
• un film B comprenant un acétal de polyvinyle et supérieur ou égal à ou à plus de 16 % en poids d'un plastifiant.

6. Film d'intercouche thermoplastique multicouches selon l'une quelconque des revendications ci-dessus dans lequel les films A1, A2 et A3 sont préparés par un processus de moulage de solvant.

7. Film d'intercouche thermoplastique multicouches selon l'une quelconque des revendications ci-dessus dans lequel les films A1, A2 et A3 ont une épaisseur de 5 à 100 µm.

8. Film d'intercouche thermoplastique multicouches selon l'une quelconque des revendications ci-dessus dans lequel les films C1, C2 et C3 optionnel ont une épaisseur de 1 à 10 µm.

9. Film d'intercouche thermoplastique multicouches selon l'une quelconque des revendications ci-dessus dans lequel chaque acétal de polyvinyle est un butyral de polyvinyle.

10. Film d'intercouche thermoplastique multicouches selon l'une quelconque des revendications ci-dessus dans lequel les films A1, A2 et A3 ne comprennent chacun aucun plastifiant ajouté.

11. Verre laminé comprenant deux feuilles de verre et l'intercouche thermoplastique multicouches selon l'une quelconque des revendications 1 à 10.

12. Verre laminé selon la revendication 11 comprenant deux feuilles de verre et une intercouche thermoplastique multicouches comprenant, dans cet ordre,
• une première feuille de verre,
• un film A1 comprenant un acétal de polyvinyle et un composé fluorescent,
• un film optionnel C1 comprenant un alcool de polyvinyle,
• un film A2 comprenant un acétal de polyvinyle et un composé fluorescent,
• un film optionnel C2 comprenant un alcool de polyvinyle,
• un film A3 comprenant un acétal de polyvinyle et un composé fluorescent,
• un film C3 comprenant un alcool de polyvinyle ,
• un film B comprenant un acétal de polyvinyle et supérieur ou égal à ou à plus de 16 % en poids d'un plastifiant et
• une seconde feuille de verre.

13. Verre laminé selon la revendication 11 comprenant deux feuilles de verre et une intercouche thermoplastique multicouches comprenant, dans cet ordre,
• une première feuille de verre,
• un film A1 comprenant un acétal de polyvinyle et un composé fluorescent,
• un film optionnel C1 comprenant un alcool de polyvinyle,
• un film A2 comprenant un acétal de polyvinyle et un composé fluorescent,
• un film optionnel C2 comprenant un alcool de polyvinyle,
• un film A3 comprenant un acétal de polyvinyle et un composé fluorescent,
• un film C3 comprenant un alcool de polyvinyle ,
• un film B comprenant un acétal de polyvinyle et supérieur ou égal à ou à plus de 16 % en poids d'un plastifiant et
• une seconde feuille de verre.

14. Utilisation du verre laminé selon la revendication 11, 12 ou 13 comme coupe-vent, fenêtre latérale, fenêtre arrière et/ou une lucarne dans un véhicule à moteur ; comme vitrage pour un avion, un train ou un bateau ou comme vitrage pour fenêtre de magasin, élévateur ou façade.
